(19) Europäisches Patentamt
European Patent Office
Office européen des brevets

(11) **EP 1 512 235 B1**

(12) **EUROPEAN PATENT SPECIFICATION**

(45) Date of publication and mention
of the grant of the patent:
**26.10.2005 Bulletin 2005/43**

(51) Int Cl.[7]: **H04B 10/155**, H04J 14/02,
H04B 10/12

(21) Application number: **03735865.2**

(22) Date of filing: **10.06.2003**

(86) International application number:
**PCT/IB2003/002191**

(87) International publication number:
**WO 2003/105372 (18.12.2003 Gazette 2003/51)**

(54) **METHODS FOR TRANSMITTING AND RECEIVING LASER SIGNALS, AS WELL AS TRANSMITTER AND RECEIVER WHICH CARRY OUT SAID METHODS**

VERFAHREN UND ANORDNUNGEN ZUM SENDEN UND ZUM EMPFANG VON LASERSIGNALEN

PROCEDES POUR EMETTRE ET RECEVOIR DES SIGNAUX LASER, EMETTEUR ET RECEPTEUR PERMETTANT DE REALISER CES PROCEDES

(84) Designated Contracting States:
**AT BE BG CH CY CZ DE DK EE ES FI FR GB GR HU IE IT LI LU MC NL PT RO SE SI SK TR**

(30) Priority: **10.06.2002 WOPCT/IT02/00382**

(43) Date of publication of application:
**09.03.2005 Bulletin 2005/10**

(73) Proprietor: **B.C.D. S.R.L.**
**20040 Cornate d'Adda Mi (IT)**

(72) Inventor: **PANZERI, Carluccio**
**I-20040 Cornate d'Adda Mi (IT)**

(74) Representative: **Pizzoli, Antonio et al**
**Società Italiana Brevetti SpA,**
**Via G. Carducci 8**
**20123 Milano (IT)**

(56) References cited:
**EP-A- 0 772 312          US-A- 5 339 184**

**Description**

The present invention relates to a method for transmitting laser signals, and in particular to a method which can be employed for transmitting laser signals in free space (air). The most common applications comprise for instance telecommunication, ATM or Ethernet/IP networks, as well as surveillance or broadcast service systems, etc.. The present invention also relates to a method for receiving the laser signals so transmitted, as well as a transmitter and a receiver which carry out said methods.

The known methods and apparatuses for transmitting and receiving laser signals provide for a direct modulation of the laser signal by means of an analog or digital signal containing the information to be transmitted, as well as a corresponding direct demodulation of the received laser signal. Some known kinds of direct modulation are the OOK (On/Off Keying) modulation and the PPM (Pulse Position Modulation) modulation.

In these known methods the transmitter works in saturation conditions (ON/OFF) and employs the electric signal containing the data to be transmitted for directly modulating a laser signal, which comprises a corresponding sequence of more or less intense photon emissions. Analogously, the receiver transforms the received laser signal into an electric signal which is equalized in amplitude and synchronized for returning the electric signal of the transmitter.

The optical communication.systems in free space, called Free Space Optics (FSO), are generally based on one or more laser emitters coupled with one or more lenses or optical devices in the transmitter, and on one or more lenses for focusing the received laser beam onto a PIN- or APD-type electro-optical transducer/detector in the receiver. In this known optical communication method, artificial and/or natural light interferences are translated in the receiver as low frequency interfering signals which overlap the transmitted signal, thereby altering the signal/noise ratio in the receiver and decreasing the performances of the transmission system.

Known methods and apparatuses for directly modulating the laser signal with high frequency carrier signals are described in the articles "Simultaneous electro-optical upconversion to 60 GHz of uncoded OFDM signals" of M. Sauer et al. (YP010319747) and "Optical interfaces without light sources for base station designs in fiber-wireless systems incorporating WDM" of A. Nirmalathas et al. (XP010367434).

US 757531, US 5146359, US 5146359 and EP 772312 disclose instead known laser signal receivers and/or transmitters, which carry out the demodulation of these signals by means of complex methods and devices which are not particularly suitable for eliminating light interferences, since they are essentially dedicated to the reception of laser signals transmitted through optical fibers.

It is therefore an object of the present invention to provide methods and apparatuses which are free from said disadvantages, i.e. which allow to transmit and receive laser signals with better performances not only through optical fibers, but also and especially in a free space. Said object is achieved with two methods, a transmitter and a receiver, the main features of which are disclosed in claims 1, 11, 17 and 26, respectively, while other features are disclosed in the remaining claims.

In the transmission method and in the transmitter according to the present invention the analog or digital signal to be transmitted is not used as in the known methods for directly modulating the signal of a laser emitter, but undergoes at least one modulation with a carrier signal having an intermediate frequency before it is sent thereto. Analogously, in the reception method and in the receiver according to the present invention the electric signal obtained from the laser receiver is demodulated and decoded, if necessary, for obtaining the original signal.

The analog or digital signal to be transmitted is therefore employed for modulating one or more carrier signals at an intermediate frequency which in turn modulate the laser signal.

The present invention allows to use more modulated signals combined with each other which directly control the laser signal, provided that a homogeneous modulation process for all signals is used, so as to exploit the whole dynamic of the electric signal controlling the laser signal.

Thanks to the particular modulation and demodulation methods, the present invention also allows the use of:

-    selective filterings of the intermediate frequency signal;
-    automatic gain control circuits which increase the dynamic of the received signal;
-    specific algorithms for error correction, signal scrambling, as well as bit and symbol interleaving,

so as to notably improve the system gain, i.e. the signal/noise ratio in the receiver, with respect to an non-encoded system.

The electric signal to be transmitted is suitably modulated at an intermediate frequency, for instance of 70 or 140 MHz, which depends upon the kind of signal to be transmitted, in particular by using modulation processes of the FSK (Frequency Shift Keying), PSK (Phase Shift Keying), QPSK (Quadrature Phase Shift Keying), OQPSK (Offset Quadrature Phase Shift Keying) or OQAM (Offset Quadrature Amplitude Modulation) kind for digital signals or of the FM (Frequency Modulation) kind for analog signals, which allow the use of circuits working in saturation at a constant power.

In these known kinds of modulation at constant amplitude, contrary to the known methods and apparatuses which use OOK and/or PPM kind modulations, wherein the information to be transmitted depends upon the amplitude and/or the position of the signal pulse, the information depends upon its phase or frequency. The information can thus be easily retrieved since it is totally insensible to the use of circuits and devices which work in saturation.

It is also possible to employ modulation processes which provide for the use of linear circuits as the M-QAM (Multilevel Quadrature Amplitude Modulation) and COFDM (Coded Orthogonal Frequency Division Modulation) processes for digital signals or more simply AM (Amplitude Modulation), AM-DSB (Amplitude Modulation Double Side Band), AM-DSB-SC (Amplitude Modulation Double Side Band-Suppression Carrier), AM-VSB (Amplitude Modulation Vestigial Side Band) processes for analog signals, although with a decrease of the usable signal/noise ratio in the receiver and therefore of the availability of the laser connection.

The methods and the apparatuses according to the present invention allow to obtain considerable advantages with respect to the known ones, and in particular:

1) they are less sensible to natural or artificial optical interferences at constant or variable power (sun, gas discharge lamps, etc.) which are converted into a low frequency noise in the receiver at a band going from the continuous component up to about 1-2 MHz, since the transmission of the modulated signal is substantially free from the continuous component;

2) they limit the signal band, so that they can combine different signals at intermediate frequencies which contain different information but use modulation processes homogeneous with each other;

3) in case of digital signals, they can use error correctors of the FEC (Forward Error Correction) kind associated to bit and symbol interleaving algorithms for fighting the selective fading (scintillation) due to atmospheric phenomena and linked to the propagation of the laser signal in air, thus increasing the reliability and above all the connection availability;

4) by using electro-optical devices and components for high bit rates (1,25 Gb/s and above), they can combine digital signals modulated at different intermediate frequencies, for example with FDM (Frequency Division Multiplexing) multiplexing techniques, so as to increase the capacity of the transmitted data coming from different sources and sent through a single laser connection;

5) by reducing the power of the modulating signal of the laser emitter, they can transmit analog signals modulated in amplitude or digital signals encoded on more levels by means of a mono-carrier or multi-carrier modulator.

By decreasing the system gain of the system, the method according to the present invention further allows the distribution of data and broadcast services for public or private networks at high bit rates by using optical systems in free space on distances from 0,2 to 1 Km.

According to a particular aspect of the invention, the intermediate frequency of the carrier signals corresponds to the speed of the encoded and decoded data in the transmitter and in the receiver, respectively, so as to simplify their working. In particular the working of the receiver is simplified, since the frequency of the encoded and demodulated digital signals coincides with the clock frequency of the same receiver. With this arrangement it is possible to employ a single clock recovery algorithm which automatically recovers also the carrier signal.

Therefore, the sequence of the base band symbols which carry the information is modulated in the transmitter by means of a carrier signal, the frequency of which is linked to the frequency of the symbols of the same signal, and is subsequently demodulated in the receiver without the necessity of estimating the phase and the frequency of the carrier signal, since it coincides with the frequency of the clock recovered from the demodulated information. All this involves an improvement of the features of the demodulator with respect to non-encoded systems and demodulators, in which the performances referred to the error rate (Bit Error Rate) are characterized by the performances of the algorithm which estimates and recovers the phase and the frequency of the carrier signal. In the present invention, the use of the sole clock recovery algorithm in the reception, which is simultaneously employed also as a carrier signal, increases the performances under the same noise in terms of resistance to the carrier droppings when there is a low signal/noise ratio, i.e. very high error rates, for instance from $1*10^{-3}$ to $1*10^{-2}$.

Further advantages and features of the methods, the transmitter and the receiver according to the present invention will become clear to those skilled in the art from the following detailed and non-limiting description of two embodiments thereof with reference to the attached drawings, wherein:

- figure 1 shows a block scheme of a first digital transmitter which carries out the transmission method according to the first embodiment of the invention;
- figure 2 shows a block scheme of a first digital receiver which carries out the reception method according to the first embodiment of the invention;
- figure 3 shows a block scheme of a second digital transmitter which carries out the transmission method according to the second and preferred embodiment of the invention; and
- figure 4 shows a block scheme of a second digital receiver which carries out the reception method according to the second and preferred embodiment of the invention.

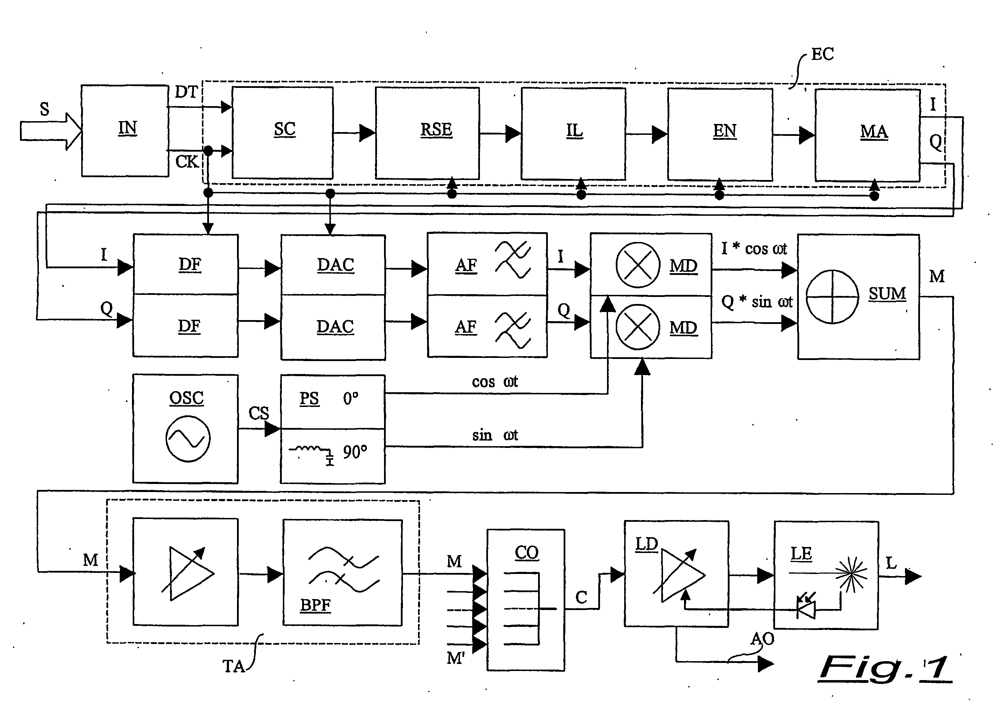

Referring to figure 1, it is seen that the transmitter according to the first embodiment of the invention comprises in a known way an input interface IN which receives the signal S to be transmitted and adapts it according to the kind of signal. For example, if the signal S is digital, interface IN adapts its bit rate and code, while if the signal S is analog, interface IN adapts it in amplitude and determines the input impedance of the transmitter. Interface IN extracts the clock CK from the data of signal S and is connected to an encoding circuit EC comprising in particular a scrambler SC which encodes the signal DT coming from interface IN so that the transmitted signal has in the frequency domain a homogeneous and continuous spectrum ensuring a constant average power. Said encoding is always active also when there is no input signal for facilitating the signal locking operations in the receiver. Scrambler SC is connected to an encoder RSE, in particular of the Reed-Solomon kind, for correcting errors, in any, in the signal, which is in turn connected to an interleaver IL, for instance of the convolutional kind, for attenuating the burst errors. Interleaver IL is connected to an encoder EN, in particular of the FEC (Forward Error Correction) kind, which encodes the signal by adding a redundance word code depending upon the selected rate (for example with a rate of 1/2 encoder EN inserts a redundance bit every bit of transmitted data), thus preparing the signal for a mapper MA which, according to the signal received from the previous circuits and algorithms, to the working mode and to the chosen configuration, builds a data constellation, for instance according to the Gray mapping, and sends a corresponding pair of signals I and Q containing the symbols to be transmitted.

Signals I and Q encoded by the encoding circuit EC are filtered by a pair of digital filters DF, in particular of the FIR (Finite Impulse Response) kind, which, according to the cases, can act as anti-alias filters or shape the signal pulse with a determined roll-off. After this channel filtering operation, signals I and Q are converted into analog signals by a pair of digital-to-analog converters DAC and filtered again by a pair of analog filters AF also acting as anti-alias filters. The clock signal CK transmitted by interface IN is employed for synchronizing the devices of the encoding circuit EC, the digital filters DF and the digital-to-analog converters DAC.

After said encoding and filtering phase, signals I and Q obtained by the input signal S come to a pair of modulators MD, which suitably modulate these signals with a pair of sinusoidal and cosinusoidal carrier signals of the $\sin \omega t$ and $\cos \omega t$ kind, obtained by shifting of 90° with a phase shifter PS a carrier signal CS which in the present embodiment consists of a wave generated by a free oscillator OSC.

The $I*\cos \omega t$ and $Q*\sin \omega t$ signals sent by modulators MD are added to each other by an adder SUM and the resulting modulated signal M is sent to an amplifier TA. The latter amplifies in a known way the signal M before sending it to the driver LD of a laser emitter LE of a known kind which emits, for instance through the free space, a laser signal L corresponding to this electric signal. Driver LD can comprise an auxiliary output AO for carrying out local checks of the signal sent by the laser emitter LE or for sending the signal to a second laser emitter, if any.

The frequency of the carrier signals CS, $\sin \omega t$ and $\cos \omega t$ is suitably an intermediate frequency, for instance of 70 MHz, comprised between the frequency of the input signal S and the frequency of the laser signal L, in particular comprised between 10 and 2000 MHz. Amplifier TA can comprise a band-pass filter BPF set at this intermediate frequency for eliminating harmonics, if any, generated by modulators MD.

Between the band-pass filter BPF and driver LD can be arranged a combiner CO which combines in a known way signal M with other independent signals M' at different intermediate frequencies coming from other circuits with modulators (not shown in the figure) similar or the same as the above described one, thus obtaining a single signal C which contains these signals and is sent to the laser emitter LE.

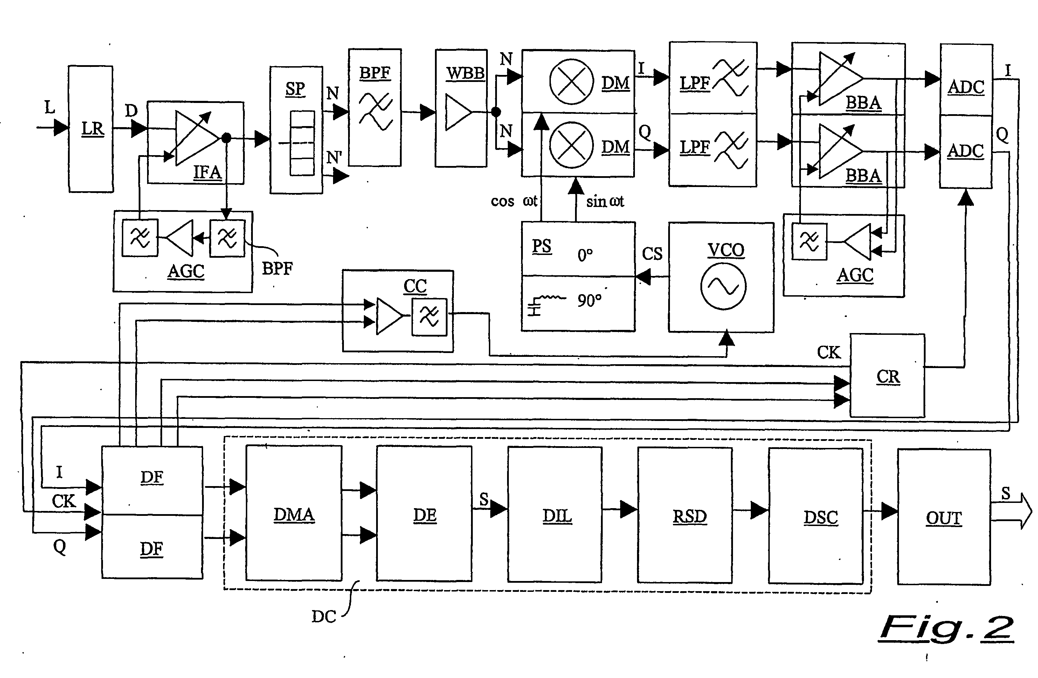

Referring now to figure 2, it is seen that the receiver according to the present embodiment of the invention comprises in a known way a laser receiver LR, for example a detecting photodiode of the PIN or APD kind, which receives a laser signal L, for instance transmitted by the above described transmitter. The laser receiver LR sends a corresponding electric signal D to a high dynamic intermediate frequency amplifier IFA with variable gain, which is preferably connected to an AGC (Automatic Gain Control) circuit for increasing the dynamic of the received signal. Amplifier IFA provides a signal N of the $I*\sin \omega t + Q*\cos \omega t$ kind to a pair of demodulators DM which demodulate this signal according to two carrier signals $\sin \omega t$ and $\cos \omega t$ obtained by phase shifting with a phase shifter PS a carrier signal CS which in the present embodiment consists of a wave generated by a voltage controlled oscillator VCO having the same frequency of the free oscillator OSC contained in the transmitter of the first embodiment. Circuit AGC is preferably set at the intermediate frequency of signal N by means of a band-pass filter connected upstream the same circuit. Between amplifier IFA and demodulators DM can be arranged a splitter SP which splits signal D by separating a signal N from a plurality of other independent signals N' at different intermediate frequencies combined with each other in the transmitter which transmitted signal L, for instance in the above described transmitter. In this case, splitter SP is connected to a band-pass filter BPF which is set at the intermediate frequency of signal N and is in turn connected to a wide-band buffer WBB connected to demodulators DM. The intermediate frequency signals N' are sent to other circuits with demodulators (not shown in the figure) for obtaining electric signals corresponding thereto.

The demodulated signals I and Q are filtered by a pair of low-pass filters LPF and are amplified by a pair of base band amplifiers BBA which are preferably high dynamic amplifiers with variable gain and are connected to a circuit AGC (Automatic Gain Control) for keeping the amplitude of the received signal constant. Signals I and Q amplified by amplifiers BBA are then converted into a digital form by a pair of analog-to-digital converters ADC and sent to a pair of digital filters DF, in particular of the FIR (Finite Impulse Response) kind, which act also as adaptive equalizers of signals I and Q. In fact, filters DF control the quality of the demodulated signals I and Q and adjust in real time the values of the coefficients of their inputs. The signals so filtered and equalized are therefore free from ISI (Inter Symbol Interference) interference and errors due to phenomena caused by the propagation of the laser signal L in air, such as for example the selective fading (scintillation) present in particular atmospheric conditions. The information correlation between signals I and Q further allows, by means of a control circuit CC, to obtain the correct voltage for controlling the frequency and the phase of oscillator VCO and thus reconstruct the carrier signal CS of the transmitter, in particular the signal generated by the free oscillator OSC of the above described transmitter. The output signal from filters DF are subsequently processed by a decoding circuit DC comprising a demapper DMA connected to a decoder DE, for instance of the FEC (Forward Error Correction) kind, which corrects errors, if any, in the signals and provides a single signal S. The latter is in turn reordered by a deinterleaver DIL, decoded by a decoder RSD, for example of the Reed-Solomon kind, and by a descrambler DSC, as well as transmitted to an output interface OUT, which returns a signal S, in particular the same as the one received from the input interface IN of the above described transmitter. The interface OUT returns the data in a suitable format in terms of bit rate and code for being correctly sent outside, for example toward a data network or an electronic device. In case of an analog signal, the output interface OUT can provide the signal with amplitude and impedance as defined in the ITU-T and/or ETSI standards. The signals I and Q transmitted by the digital filters DF are also sent to a clock recovery circuit CR, also of the known kind, which recovers the clock signal CK of the symbols transmitted through the signals I and Q, so as to synchronize the decoding circuit DC, the same digital filters DF and the digital-to-analog converters DAC.

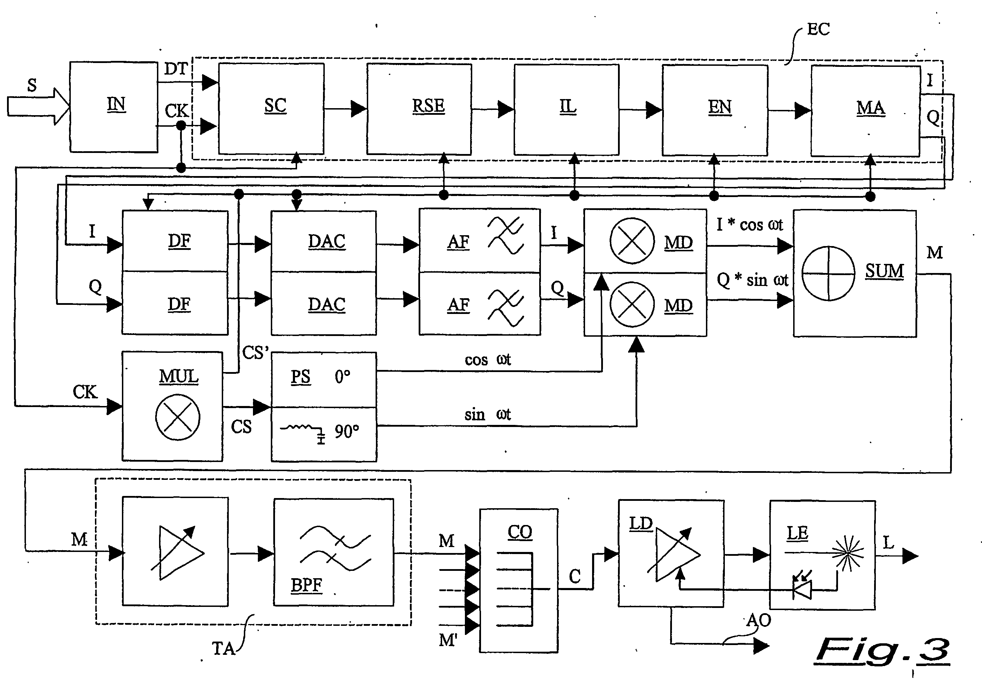

Referring to figure 3, it is seen that the second and preferred embodiment of the transmitter is similar to the first one, but differs in that the frequency of the carrier signals CS, sin ωt and cos ωt does not depend upon oscillator OSC, but is suitably an intermediate frequency corresponding to the speed of the data in signal S, i.e. to the frequency of the relevant clock signal CK. For this purpose, interface IN transmits the clock signal CK also to a multiplier MUL which multiplies this signal by a factor depending upon the code rate used in the encoding circuit EC. Multiplier MUL sends then to the phase shifter PS a carrier signal CS at a frequency f(CS) which is for instance determined according to the following formula:

$$f(CS) = f(CK) \times r(RSE) \times r(EN)$$

wherein f(CS) is the frequency of the carrier signal CS, f(CK) is the frequency of the clock signal CK, r(RSE) is the redundancy introduced by encoder RSE and r(EN) is the redundancy introduced by encoder EN.

Therefore, for obtaining the frequency f(CS) of signal CS the frequency f(CK) of the clock signal CK is multiplied by a factor X/Y which can be an integer or fractional number which depends upon the kind of encoding applied to the input signal S.

The devices of the encoding circuit EC, of the digital filters DF and of the converters DAC are controlled by a clock signal CS' which is generated by multiplier MUL and can be equal to the clock signal CK, to the carrier signal CS or to a multiple thereof.

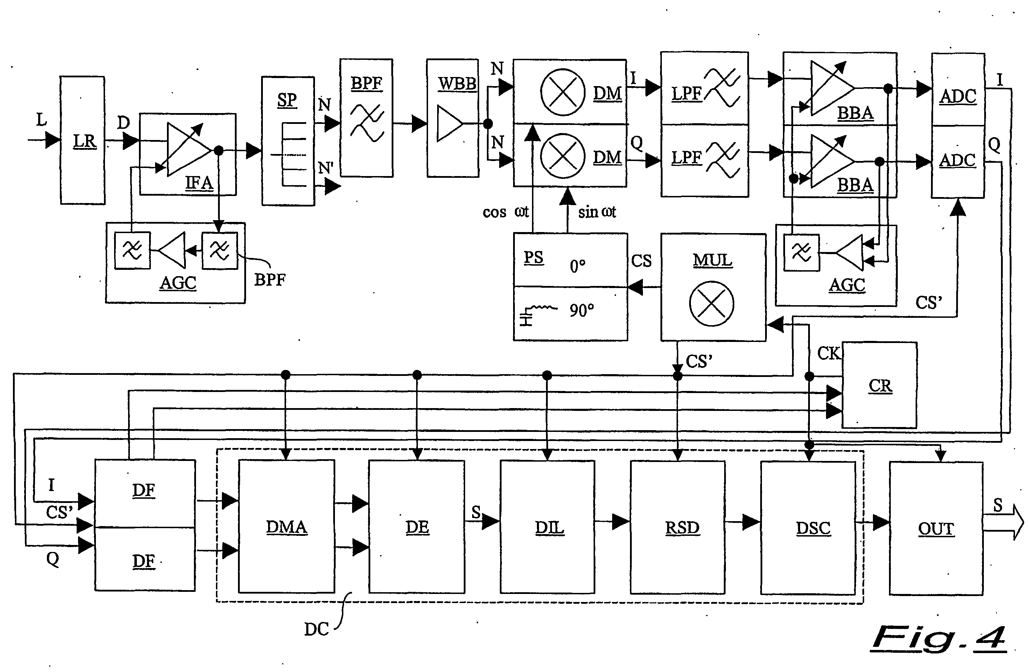

Referring to figure 4, it is seen that the second and preferred embodiment of the receiver is similar to the first one, but differs in that the carrier signals sin ωt and cos ωt are obtained by shifting with the phase shifter PS a carrier signal CS obtained not from a VCO oscillator, but from a multiplier MUL which according to the clock signal CK received from the clock recovery circuit CR obtains the signals for the working of demodulators DM and for the decoding circuit DC. Multipliers MUL of the receiver and of the transmitter according to the second embodiment therefore work substantially in the same way.

In the various embodiments of the present invention, the signal to be transmitted can be modulated with modulation processes of the FSK (Frequency Shift Keying), PSK (Phase Shift Keying), QPSK (Quadrature Phase Shift Keying), OQPSK (Offset Quadrature Phase Shift Keying) or OQAM (Offset Quadrature Amplitude Modulation) kind for digital signals or of the FM (Frequency Modulation) kind for analog signals, so as to employ optoelectronic circuits and devices which work in saturation conditions.

For example, the FM modulation can be employed for transmitting a broadcast analog video signal with optical transceivers in the free space, while the other above cited modulations are suitable for the digital transmission of data for telephone telecommunication networks or packed digital transmission in ATM networks and/or with IP/Ethernet protocols.

In other embodiments of the present invention, the signal to be transmitted can be modulated with modulation processes of the M-QAM (Multilevel Quadrature Amplitude Modulation) and COFDM (Coded Orthogonal Frequency Division Modulation) kind for digital signals or of the AM (Amplitude Modulation), AM-DSB (Amplitude Modulation Double Side Band), AM-DSB-SC (Amplitude Modulation Double Side Band-Suppression Carrier), AM-VSB (Amplitude Modulation Vestigial Side Band) kind for analog signals, so as to employ optoelectronic circuits and devices which work in a linear state.

The present invention can be applied to all the transmitters and receivers which can transmit analog and digital signals exploiting wavelengths suitable for the transmission in the free space (air), i.e. at 780, 850, 870, 911 nm (1st window), 1300, 1310 nm (2nd window) and 1550 nm (3rd window) with powers from some mW to some hundreds of mW.

## Claims

1. Method for transmitting laser signals (L) in free space, wherein an electric signal (S) containing information to be transmitted is received by an input interface (IN) and sent to a laser emitter (LE) which emits a laser signal (L) containing said information, **characterized in that** before reaching the laser emitter (LE) said electric signal (S) or one or more electric signals (I, Q) corresponding thereto modulate one or more carrier signals (CS, sin ωt, cos ωt) at intermediate frequencies comprised between the frequencies of the laser signal (L) and the electric signal (S) received by the input interface (IN), wherein the electric signal (S), before it modulates the carrier signals (CS, sin ωt, cos ωt), is encoded for obtaining one or more electric signals corresponding thereto (I, Q).

2. Method according to the previous claim, **characterized in that** the electric signal (M) modulated in said modulation of the carrier signals (CS, sin ωt, cos ωt) at an intermediate frequency is amplified before it reaches the laser emitter (LE).

3. Method according to claim 1 or 2, **characterized in that** the electric signal (M) modulated at an intermediate frequency is combined with other electric signals (M') modulated at intermediate frequencies before it reaches the laser emitter (LE).

4. Method according to one of the previous claims, **characterized in that** the encoding of said electric signal (S) comprises processes of scrambling, Reed-Solomon encoding, interleaving and/or FEC encoding.

5. Method according to one of the previous claims, **characterized in that** the signal or the signals (I, Q) obtained from said encoding are filtered and converted into an analog form before they are modulated.

6. Method according to one of the previous claims, **characterized in that** the carrier signals (CS, sin ωt, cos ωt) are modulated with one or more digital signals (I, Q) by means of a FSK, PSK, QPSK, OQPSK or O-QAM modulation process at a constant power or by means of a QAM, M-QAM or COFDM modulation process for digital linear signals.

7. Method according to one of claims 1 to 5, **characterized in that** the carrier signals (CS, sin ωt, cos ωt) are modulated with one or more analog signals by means of a FM modulation process at a constant power or by means of a AM, AM-DSB, AM-DSB-SC or AM-VSB modulation process with amplitude envelope.

8. Method according to one of the previous claims, **characterized in that** the carrier signals (CS, sin ωt, cos ωt) have a frequency comprised between 10 and 2000 MHz.

9. Method according to one of the previous claims, **characterized in that** the intermediate frequency of the carrier signals (CS, sin ωt, cos ωt) corresponds to the frequency of the clock signal (CK) contained in the signal (S) to be transmitted multiplied by a factor depending upon the kind of encoding applied to this signal (S).

10. Method according to claim 9, **characterized in that** the intermediate frequency of the carrier signals (CS, sin ωt, cos ωt) is obtained from the following formula:

$$f(CS) = f(CK) \times r(RSE) \times r(EN)$$

wherein f(CS) is said intermediate frequency, f(CK) is the frequency of said clock signal (CK), r(RSE) is the redundancy introduced by a Reed-Solomon encoding and r(EN) is the redundancy introduced b a FEC encoding.

11. Method for receiving laser signals in free space, wherein a laser signal (L) containing information is received by a laser receiver (LR) and sent to an output interface (OUT) which returns an electric signal (S) containing said information, **characterized in that** at least one electric signal (D) corresponding to said laser signal (L) is demodulated by means of one or more carrier signals (CS, sin ωt, cos ωt) at intermediate frequencies comprised between the frequencies of the laser signal (L) and of the electric signal (S) returned by the output interface (OUT), after which it is sent to the output interface (OUT), wherein the signals (I, Q) obtained by said demodulation are decoded before they reach the output interface (OUT).

**12.** Method according to claim 11, **characterized in that** the electric signal (D) corresponding to the laser signal (L) is amplified by one or more variable gain amplifiers (IFA, AGC) before it is demodulated.

**13.** Method according to claim 11 or 12, **characterized in that** the electric signal (D) corresponding to the laser signal (L) is divided by a splitter (SP) for obtaining a plurality of electric signals (N, N') at intermediate frequencies.

**14.** Method according to one of claims 11 to 13, **characterized in that** the decoding of said electric signals (I, Q) comprises processes of FEC decoding, deinterleaving, Reed-Solomon decoding and/or descrambling.

**15.** Method according to one of claims 11 to 14, **characterized in that** said electric signals (I, Q) are filtered and converted into a digital form before they are decoded.

**16.** Method according to claim 14 or 15, **characterized in that** the intermediate frequency of the carrier signals (CS, sin ωt, cos ωt) corresponds to the frequency of the clock signal (CK) contained in said received electric signals (I, Q) multiplied by a factor depending upon the kind of decoding applied to these signals (I, Q).

**17.** Transmitter for laser signals in free space, which comprises at least one input interface (IN) suitable for receiving an electric signal (S) containing information to be transmitted, as well as a laser emitter (LE) which emits a laser signal (L) containing said information, **characterized in that** one or more modulators (MD), suitable for modulating with said electric signal (S) or with one or more electric signals (I, Q) corresponding thereto one or more carrier signals (CS, sin ωt, cos ωt) at intermediate frequencies comprised between the frequencies of the laser signal (L) and of the electric signals (S) received by the input interface (IN), are arranged between the input interface (IN) and the laser emitter (LE), wherein the input interface (IN) is connected to an encoding circuit (EC) which encodes the electric signal (S) containing the information to be transmitted and provides one or more encoded signals (I, Q) which modulate the carrier signals (CS, sin ωt, cos ωt).

**18.** Transmitter according to claim 17, **characterized in that** the encoding circuit (EC) comprises a scrambler (SC), a Reed-Solomon encoder (RSE), an interleaver (IL) and/or a FEC encoder (EN).

**19.** Transmitter according to claim 17 or 18 , **characterized in that** one or more electric signals (I, Q) containing the information to be transmitted are filtered by one or more digital filters (DF) of the FIR kind before they modulate the carrier signals (CS, sin ωt, cos ωt).

**20.** Transmitter according to one of claims 17 to 19, **characterized in that** one or more signals emitted by the modulators (MD) are added to each other by an adder (SUM).

**21.** Transmitter according to one of claims 17 to 20, **characterized in that** the modulated signal (M) to be transmitted is amplified by an amplifier (TA) connected to the laser emitter (LE).

**22.** Transmitter according to claim 21, **characterized in that** said amplifier (TA) comprises a band-pass filter (BPF) set at the intermediate frequency of the carrier signals (CS, sin ωt, cos ωt).

**23.** Transmitter according to one of claims 17 to 22 **characterized in that** a combiner (CO) which combines the modulated signal (M) with other signals (M') modulated at different intermediate frequencies is arranged before the laser emitter (LE), so as to obtain a single signal (C).

**24.** Transmitter according to one of claims 17 to 23, **characterized in that** the input interface (IN) extracts a clock signal (CK) from the signal (S) to be transmitted and sends it to a multiplier (MUL) which multiplies this signal by a factor depending upon the code rate used by the encoding circuit (EC), so as to obtain said carrier signals (CS, sin ωt, cos ωt).

**25.** Transmitter according to claim 24, **characterized in that** the intermediate frequency of the carrier signals (CS, sin ωt, cos ωt) is obtained from the following formula:

$$f(CS) = f(CK) \times r(RSE) \times r(EN)$$

wherein f(CS) is said intermediate frequency, f(CK) is the frequency of said clock signal (CK), r(RSB) is the redundancy introduced by the Reed-Solomon encoder (RSE) and r(EN) is the redundancy introduced by the FEC encoder (EN).

**26.** Receiver for laser signals in free space, which comprises at least one laser receiver (LR) suitable for receiving a laser signal (L) containing information, as well as an output interface (OUT) suitable for returning an electric signal (S) containing said information, **characterized in that** one or more demodulators (DM), suitable for demodulating one or more electric signals corresponding to said laser signal (L) with one or more carrier signals (CS, sin ωt, cos ωt) at intermediate frequencies comprised between the frequencies of the laser signal (L) and of the electric signal (S) returned by the output interface (OUT), are arranged between the laser receiver (LR) and the output interface (OUT), wherein the electric signals (I, Q) returned by said demodulators (DM) are decoded by a decoding circuit (DC).

27. Receiver according to claim 26 **characterized in that** the decoding circuit (DC) comprises a FEC decoder (DE), a deinterleaver (DIL), a Reed-Solomon decoder (RSD) and/or a descrambler (DSC).

28. Receiver according to claim 26 or 27, **characterized in that** the signals (I, Q) returned by said demodulators (DM) are filtered by one or more digital filters (DF) of the FIR kind.

29. Receiver according to claim 28, **characterized in that** said digital filters (DF) are connected to a control circuit (CC) which provides a control signal to at least one voltage controlled oscillator (VCO) which provides one or more carrier signals (CS, sin ωt, cos ωt) at intermediate frequencies according to this control signal.

30. Receiver according to one of claims 26 to 29 **characterized in that** the carrier signals (CS, sin ωt, cos ωt) at intermediate frequencies are obtained from a multiplier (MUL) according to a clock signal (CK) received from a clock recovery circuit (CR).

31. Receiver according to claim 30, **characterized in that** the clock recovery circuit (CR) is connected to said digital filters (DF) for obtaining a clock locking signal (CK) contained in said electric signals (I, Q).

32. Receiver according to one of claims 26, to 31, **characterized in that** at least one electric signal (D) corresponding to the laser signal (L) is amplified by at least one variable gain amplifier (IFA, AGC) connected to the demodulators (DM).

33. Receiver according to claim 32, **characterized in that** said variable gain amplifier (IFA, AGC) is preferably set at the intermediate frequency of the received signal (N) by means of a band-pass filter (BPF).

34. Receiver according to one of claims 26 to 33 **characterized in that** a splitter (SP), which divides the electric signal (D) corresponding to the laser signal (L) and separates a plurality of mutually combined independent signals (N, N') at different intermediate frequencies, is arranged before the demodulators (DM).

35. Receiver according to claim 34, **characterized in that** the splitter (SP) is connected to a band-pass filter (BPF) which is set at the intermediate frequency of the received signal (N) and is in turn connected to a wide-band buffer (WBB).

**Patentansprüche**

1. Verfahren zum Aussenden von Lasersignalen (L) im freien Raum, wobei ein zu sendende Information enthaltendes elektrisches Signal (S) von einer Eingangsschnittstelle (IN) empfangen und zu einem Lasersender (LE) gesandt wird, der ein Lasersignal (L) abgibt, das die Information enthält, **dadurch gekennzeichnet, dass** das elektrische Signal (S) oder eines oder mehrere diesem entsprechende elektrische Signale (I,Q) vor dem Erreichen des Lasersenders (LE) ein oder mehrere Trägersignale (CS, sin ωt, cos ωt) bei Zwischenfrequenzen moduliert, die zwischen den Frequenzen des Lasersignals (L) und des von der Eingangsschnittstelle (IN) empfangenen elektrischen Signals (S) liegt, wobei das elektrische Signal (S), bevor es die Trägersignale (CS, sinωt, cosωt) moduliert, kodiert wird, um ein oder mehrere diesem entsprechende elektrische Signale (I,Q) zu erhalten.

2. Verfahren nach dem vorangehenden Anspruch, **dadurch gekennzeichnet, dass** das elektrische Signal (M), das in der Modulation der Trägersignale (CS, sinωt, cosωt) bei einer Zwischenfrequenz moduliert wird, verstärkt wird, bevor es den Lasersender (LE) erreicht.

3. Verfahren nach Anspruch 1 oder 2, **dadurch gekennzeichnet, dass** das bei einer Zwischenfrequenz modulierte elektrische Signal (M) mit einem weiteren elektrischen Signal (M') kombiniert wird, das bei Zwischenfrequenzen moduliert wird, bevor es den Lasersender (LE) erreicht.

4. Verfahren nach einem der vorangehenden Ansprüche, **dadurch gekennzeichnet, dass** die Kodierung des elektrischen Signals (S) den Vorgang der Verschlüsselung, der Reed-Solomon-Kodierung, der Verschachtelung und/oder der FEC-Kodierung enthält.

5. Verfahren nach einem der vorangehenden Ansprüche, **dadurch gekennzeichnet, dass** das Signal oder die Signale (I,Q), die man von der Kodierung erhält, gefiltert und in eine analoge Form umgewandelt werden, bevor sie moduliert werden.

6. Verfahren nach einem der vorangehenden Ansprüche, **dadurch gekennzeichnet, dass** die Trägersignale (CS, sinωt, cosωt) mit einem oder mit mehreren digitalen Signalen (I,Q) mittels einer FSK-, PSK-, QPSK-, OQPSK- oder O-QAM-Modulation bei konstanter Leistung oder mittels eines QAM-, M-QAM- oder COFDM-Modulation für digitale lineare Signale moduliert werden.

7. Verfahren nach einem der Ansprüche 1 bis 5, **dadurch gekennzeichnet, dass** die Trägersignale (CS, sinωt, cosωt) mit einem oder mit mehreren analogen Signalen mittels einer FM-Modulation bei einer konstanten Leistung oder mittels einer AM-, AM-DSB-, AM-DSB-SC- oder AM-VSB-Modulation mit Amplitudenhüllkurve moduliert werden.

8. Verfahren nach einem der vorangehenden Ansprüche, **dadurch gekennzeichnet, dass** die Trägersignale (CS, sinωt, cosωt) eine Frequenz haben, die zwischen 10 und 2000 MHz liegt.

9. Verfahren nach einem der vorangehenden Ansprüche, **dadurch gekennzeichnet, dass** die Zwischenfrequenz der Trägersignale (CS, sinωt, cosωt) der Frequenz des Taktsignals (CK) entspricht, die in dem zu übertragenden Signal (S) enthalten ist, multipliziert mit einem Faktor, der von der Art der Kodierung abhängt, die an diesem Signal (S) angewendet wird.

10. Verfahren nach Anspruch 9, **dadurch gekennzeichnet, dass** die Zwischenfrequenz der Trägersignale (CS, sinωt, cosωt) aus der folgenden Formel erhalten wird:

$$f(CS) = f(CK) \times r(RSE) \times r(EN)$$

wobei f(CS) die Zwischenfrequenz ist, f(CK) die Frequenz des Taktsignals (CK) ist, r(RSE) die Redundanz ist, die durch eine Reed-Solomon-Kodierung eingeführt wird, und r(EN) die Redundanz ist, die durch eine FEC-Kodierung eingeführt wird.

11. Verfahren zum Empfangen von Lasersignalen im freien Raum, wobei ein Information enthaltendes Lasersignal (L) von einem Laserempfänger (LR) empfangen wird und zu einer Ausgangsschnittstelle (OUT) gesandt wird, die ein elektrisches Signal (S) zurückgibt, das die Information enthält, **dadurch gekennzeichnet, dass** wenigstens ein dem Lasersignal (L) entsprechendes elektrisches Signal (D) mittels eines oder mehrere Trägersignale (CS, sinωt, cosωt) bei Zwischenfrequenzen demoduliert wird, die zwischen den Frequenzen des Lasersignals (L) und des von der Ausgangsschnittstelle (OUT) rückgegebenen elektrischen Signals (S) liegt, wonach es zur Ausgangsschnittstelle (OUT) gesandt wird, wobei die Signale (IQ), die durch die Demodulation erhalten werden, dekodiert werden, bevor sie die Ausgangsschnittstelle (OUT) erreichen.

12. Verfahren nach Anspruch 11, **dadurch gekennzeichnet, dass** das dem Lasersignal (L) entsprechende elektrische Signal (D) mit einem oder mehreren Verstärkern (IFA, AGC) variabler Verstärkung verstärkt wird, bevor es demoduliert wird.

13. Verfahren nach Anspruch 11 oder 12, **dadurch gekennzeichnet, dass** das dem Lasersignal (L) entsprechende elektrische Signal (D) durch einen Teiler (SP) geteilt wird, um mehrere elektrische Signale (N,N') bei Zwischenfrequenzen zu erhalten.

14. Verfahren nach einem der Ansprüche 11 bis 13, **dadurch gekennzeichnet, dass** die Dekodierung der elektrischen Signale (I,Q) das FEC-Dekodieren, Entschachteln, Reed-Solomon-Dekodieren und/ oder Entschlüsseln umfasst.

15. Verfahren nach einem der Ansprüche 11 bis 14, **dadurch gekennzeichnet, dass** die elektrischen Signale (I,Q) gefiltert und in eine digitale Form umgewandelt werden, bevor sie dekodiert werden.

16. Verfahren nach Anspruch 14 oder 15, **dadurch gekennzeichnet, dass** die Zwischenfrequenz der Trägersignale (CS, sinωt, cosωt) der Frequenz des in den empfangenen elektrischen Signalen (I,Q) enthaltenen Taktsignals (CK) multipliziert mit einem Faktor entspricht, der von der Art der an diesen Signalen (I,Q) angewendeten Dekodierung abhängt.

17. Sender für Lasersignale im freien Raum, enthaltend wenigstens eine Eingangsschnittstelle (IN), die für den Empfang eines zu sendende Information enthaltenden elektrischen Signals (S) geeignet ist, sowie einen Lasersender (LE), der ein Lasersignal (L) abgibt, das diese Information enthält, **dadurch gekennzeichnet, dass** ein oder mehrere Modulatoren (MD), die zum Modulieren von einem oder mehreren Trägersignalen (CS, sinωt, cosωt) bei Zwischenfrequenzen, die zwischen den Frequenzen des Lasersignals (L) und des von der Eingangsschnittstelle (IN) empfangenen elektrischen Signals (S) liegen, mit dem elektrischen Signal (S) oder mit einem oder mehreren diesem entsprechenden elektrischen Signalen (I,Q) zwischen der Eingangsschnittstelle (IN) und dem Lasersender (LE) angeordnet sind, wobei die Eingangsschnittstelle (IN) mit einer Kodierschaltung (EC) verbunden ist, die das die zu sendende Information enthaltende elektrische Signal (S) kodiert und ein oder mehrere kodierte Signale (I,Q) liefert, die die Trägersignale (CS, sinωt, cosωt) modulieren.

18. Sender nach Anspruch 17, **dadurch gekennzeich-**

**net, dass** die Kodierschaltung (EC) einen Verschlüsseler (SC) einen Reed-Solomon-Kodierer (RSE), einen Verschachteler (IL) und/oder einen FEC-Kodierer (EN) enthält.

19. Sender nach Anspruch 17 oder 18, **dadurch gekennzeichnet, dass** ein oder mehrere, die zu sendende Information enthaltende elektrische Signale (I,Q) durch ein oder mehrere digitale Filter (DF) der FIR-Art gefiltert werden, bevor sie die Trägersignale (CS, sinωt, cosωt) modulieren.

20. Sender nach einem der Ansprüche 17 bis 19, **dadurch gekennzeichnet, dass** ein oder mehrere Signale, die von den Modulatoren (MD) abgegeben werden, miteinander durch einen Addierer (SUM) addiert werden.

21. Sender nach einem der Ansprüche 17 bis 20, **dadurch gekennzeichnet, dass** das zu sendende modulierte Signal (M) durch einen Verstärker (TA), der mit dem Lasersender (LE) verbunden ist, verstärkt wird.

22. Sender nach Anspruch 21, **dadurch gekennzeichnet, dass** der Verstärker (TA) ein Bandpassfilter (BPF) enthält, das auf die Zwischenfrequenz der Trägersignale (CS, sinωjt, cosωt) eingestellt ist.

23. Sender nach einem der Ansprüche 17 bis 22, **dadurch gekennzeichnet, dass** ein Kombinierer (CO), der das modulierte Signal (M) mit anderen Signale (M'), die mit unterschiedüchen Zwischenfrequenzen moduliert sind, kombiniert, vor dem Lasersender (LE) angeordnet ist, um ein einziges Signal (C) zu erhalten.

24. Sender nach einem der Ansprüche 17 bis 23, **dadurch gekennzeichnet, dass** die Eingangsschnittstelle (IN) ein Taktsignal (CK) aus dem zu sendenden Signal (S) extrahiert und es an einen Multiplizierer (MUL) sendet, der dieses Signal mit einem Faktor multipliziert, der von der durch die Kodierschaltung (EC) verwendeten Kodierrate abhängt, um die Trägersignale (CS, sinωt, cosωt) zu erhalten.

25. Sender nach Anspruch 24, **dadurch gekennzeichnet, dass** die Zwischenfrequenz der Trägersignale (CS, sinωt, cosωt) aus der folgenden Formel erhalten wird:

$$r(CS)=f(CK) \times r(RSE) \times r(EN)$$

wobei f(CS) die Zwischenfrequenz ist, f(CK) die Frequenz des Taktsignals (CK) ist, r(RSE) die durch den Reed-Solomon-Kodierer (RSE) eingeführte Redundanz ist und r(EN) die durch den FEC-Kodierer (EN) eingeführte Redundanz ist.

26. Empfänger für Lasersignale im freien Raum, der wenigstens einen Laserempfänger (LR) enthält, der für den Empfang eines Information enthaltenden Lasersignals (L) geeignet ist, und mit einer Ausgangsschnittstelle (OUT), die zum Rückgeben eines diese Information enthaltenden elektrischen Signals (S) geeignet ist, **dadurch gekennzeichnet, dass** ein oder mehrere Demodulatoren (DM), die zum Demodulieren eines oder mehrerer elektrischer Signale, die dem Lasersignal (L) mit einem oder mehreren Trägersignalen (CS, sinωt, cosωt) bei Zwischenfrequenzen, die zwischen den Frequenzen des Lasersignals (L) und des von der Ausgangsschnittstelle (OUT) rückgegebenen elektrischen Signals (S) liegen, geeignet sind, zwischen dem Laserempfänger (LR) und der Ausgangsstelle (OUT) angeordnet sind, wobei die von den Demodulatoren (DM) rückgegebenen elektrischen Signale (I,Q) durch eine Dekodierschaltung (DC) dekodiert werden.

27. Empfänger nach Anspruch 26, **dadurch gekennzeichnet, dass** die Dekodierschaltung (DC) einen FEC-Dekodierer (DE), einen Entschachteler (DIL), einen Reed-Solomon-Dekodierer (RSD) und/oder einen Entschlüsseler (DSC) enthält.

28. Empfänger nach Anspruch 26 oder 27, **dadurch gekennzeichnet, dass** die Signale (I.Q), die von den Demodulatoren (DM) rückgegeben werden, von einem oder mehreren digitalen Filtern (DF) der FIR-Art gefiltert werden.

29. Empfänger nach Anspruch 28, **dadurch gekennzeichnet, dass** die digitalen Filter (DF) mit einer Steuerschaltung (CC) verbunden sind, die ein Steuersignal an wenigstens einen spannungsgesteuerten Oszillator (VCO) liefert, die ein oder mehrere Trägersignale (CS, sinωt, cosωt) bei Zwischenfrequenzen entsprechend diesem Steuersignal liefert.

30. Empfänger nach einem der Ansprüche 26 bis 29, **dadurch gekennzeichnet, dass** die Trägersignale (CS, sinωt, cosωt) bei Zwischenfrequenzen von einem Multiplizierer (MUL) entsprechend einem Taktsignal (CK) erhalten werden, das von einer Taktwiedergewinnungsschaltung (CR) erhalten wird.

31. Empfänger nach Anspruch 30, **dadurch gekennzeichnet, dass** die Taktwiedergewinnungsschaltung (CR) mit den digitalen Filtern (DF) verbunden ist, um ein Taktverriegelungssignal (CK) zu erhalten, das in den elektrischen Signalen (I,Q) enthalten ist.

**32.** Empfänger nach einem der Ansprüche 26 bis 31, **dadurch gekennzeichnet, dass** wenigstens ein elektrisches Signal (D) entsprechend dem Lasersignal (L) durch wenigstens einen Verstärker (IFA, AGC) mit automatischer Verstärkung, der mit den Demodulatoren (DM) verbunden ist, verstärkt wird.

**33.** Empfänger nach Anspruch 32, **dadurch gekennzeichnet, dass** der Verstärker (IFA,AGC) variabler Verstärkung vorzugsweise auf die Zwischenfrequenz des empfangenen Signals (N) mittels eines Bandpassfilters (BPF) eingestellt ist.

**34.** Empfänger nach einem der Ansprüche 26 bis 33, **dadurch gekennzeichnet, dass** ein Teiler (SP), der das elektrische Signal (D) entsprechend dem Lasersignal (L) teilt und mehrere miteinander kombinierte unabhängige Signale (N,N') bei unterschiedlichen Zwischenfrequenzen trennt, vor den Demodulatoren (DM) angeordnet ist.

**35.** Empfänger nach Anspruch 34, **dadurch gekennzeichnet, dass** der Teiler (SP) mit einem Bandpassfilter (BPF) verbunden ist, das auf die Zwischenfrequenz des empfangenen Signals (N) eingestellt ist und seinerseits mit einem Breitbandpuffer (WBB) verbunden ist.

**Revendications**

**1.** Procédé pour transmettre des signaux laser (L) dans un espace libre, dans lequel un signal électrique (S) contenant une information à transmettre est reçu par une interface d'entrée (IN) et est envoyé vers un émetteur laser (LE) qui émet un signal laser (L) contenant ladite information, **caractérisé en ce que** avant d'atteindre l'émetteur laser (LE), ledit signal électrique (S) ou un ou plusieurs signaux électriques (I, Q) correspondant à celui-ci module un ou plusieurs signaux de support (CS, sin ωt, cos ωt) à des fréquences intermédiaires comprises entre les fréquences du signal laser (L) et le signal électrique (S) reçu par l'interface d'entrée (IN), dans lequel le signal électrique (S), avant qu'il module les signaux de support (CS, sin ωt, cos ωt), est encodé pour obtenir un ou plusieurs signaux électriques correspondants à celui-ci (I, Q).

**2.** Procédé selon la revendication 1, **caractérisé en ce que** le signal électrique (M) modulé dans ladite modulation des signaux de support (CS, sin ωt, cos ωt), à une fréquence intermédiaire, est amplifié avant qu'il atteigne l'émetteur laser (LE).

**3.** Procédé selon la revendication 1 ou 2, **caractérisé en ce que** le signal électrique (M) modulé à une fréquence intermédiaire est combiné avec d'autres signaux électriques (M') modulés à des fréquences intermédiaires avant qu'il atteigne l'émetteur laser (LE).

**4.** Procédé selon l'une quelconque des revendications précédentes, **caractérisé en ce que** l'encodage dudit signal électrique (S) comprend des traitements d'embrouillage, d'encodage Reed-Solomon, d'entrelacement et/ou d'encodage FEC.

**5.** Procédé selon l'une quelconque des revendications précédentes, **caractérisé en ce que** le signal ou les signaux (I, Q) obtenus à partir dudit encodage sont filtrés et convertis en une forme analogique avant d'être modulée.

**6.** Procédé selon l'une quelconque des revendications précédentes, **caractérisé en ce que** les signaux de support (CS, sin ωt, cos ωt) sont modulés avec un ou plusieurs signaux numériques (I, Q) au moyen d'un traitement de modulation FSK, PSK, QPSK, OQPSK ou O-QAM à une puissance constante ou au moyen d'un traitement de modulation QAM, M-QAM ou COFDM pour des signaux linéaires numériques.

**7.** Procédé selon l'une quelconque des revendications 1 à 5, **caractérisé en ce que** les signaux de support (CS, sin ωt, cos ωt) sont modulés avec un ou plusieurs signaux analogiques au moyen d'un traitement de modulation FM à une puissance constante ou au moyen d'un traitement de modulation AM, AM-DSB, AM-DSB-SC ou AM-VSB avec une enveloppe d'amplitude.

**8.** Procédé selon l'une quelconque des revendications précédentes, **caractérisé en ce que** les signaux de support (CS, sin ωt, cos ωt) ont une fréquence comprise entre 10 et 2 000 MHz.

**9.** Procédé selon l'une quelconque des revendications précédentes, **caractérisé en ce que** la fréquence intermédiaire des signaux de support (CS, sin ωt, cos ωt) correspond à la fréquence du signal d'horloge (CK) contenu dans le signal (S) à transmettre, multiplié par un facteur dépendant du type d'encodage appliqué à ce signal (S).

**10.** Procédé selon la revendication 9, **caractérisé en ce que** la fréquence intermédiaire des signaux de support (CS, sin ωt, cos ωt) est obtenue à partir de la formule suivante :

$$f(CS) = f(CK) \times r(RSE) \times r(EN)$$

où f(CS) est ladite fréquence intermédiaire, f(CK) est la fréquence dudit signal d'horloge (CK), r(RSE) est la redondance introduite par un encodage de Reed-Solomon, et r(EN) est la redondance introduite par un encodage FEC.

11. Procédé pour recevoir des signaux laser dans un espace libre dans lequel un signal laser (L) contenant une information est reçu par un receveur laser (LR) et est envoyé vers une interface de sortie (OUT) qui renvoie un signal électrique (S) contenant ladite information, **caractérisé en ce qu'**au moins un signal électrique (D) correspondant audit signal laser (L) est démodulé au moyen d'un ou plusieurs signaux de support (CS, sin ωt, cos ωt) à des fréquences intermédiaires comprises entre les fréquences du signal laser (L) et du signal électrique (S) renvoyé par l'interface de sortie (OUT), après quoi il est envoyé vers l'interface de sortie (OUT), dans lequel les signaux (I, Q) obtenus par ladite démodulation sont décodés avant qu'ils atteignent l'interface de sortie (OUT).

12. Procédé selon la revendication 11, **caractérisé en ce que** le signal électrique (D) correspondant au signal laser (L) est amplifié par un ou plusieurs amplificateurs de gain variable (IFA, AGC) avant qu'il soit démodulé.

13. Procédé selon la revendication 11 ou 12, **caractérisé en ce que** le signal électrique (D) correspondant au signal laser (L) est divisé par un séparateur (SP) pour obtenir une pluralité de signaux électriques (N, N') à des fréquences intermédiaires.

14. Procédé selon l'une quelconque des revendications 11 à 13, **caractérisé en ce que** le décodage desdits signaux électriques (I, Q) comprend les traitements de décodage FEC, de dé-entrelacement, de décodage Reed-Solomon et/ou de désembrouillage.

15. Procédé selon l'une quelconque des revendications 11 à 14, **caractérisé en ce que** lesdits signaux électriques (I, Q) sont filtrés et convertis en une forme numérique avant d'être décodés.

16. Procédé selon la revendication 14 ou 15, **caractérisé en ce que** la fréquence intermédiaire des signaux de support (CS, sin ωt, cos ωt) correspond à la fréquence du signal d'horloge (CK) contenue dans lesdits signaux électriques reçus (I, Q) multipliés par un facteur dépendant du type de décodage appliqué à ces signaux (I, Q).

17. Transmetteur pour des signaux laser dans un espace libre qui comprend au moins une interface d'entrée (IN) apte à recevoir un signal électrique (S) contenant une information à transmettre, ainsi qu'un émetteur laser (LE) qui émet un signal laser (L) contenant ladite information, **caractérisé en ce que** un ou plusieurs modulateurs (MD), aptes à moduler avec ledit signal électrique (S) ou avec un ou plusieurs signaux électriques (I, Q) correspondant à celui-ci, un ou plusieurs signaux de support (CS, sin ωt, cos ωt) à des fréquences intermédiaires comprises entre les fréquences du signal laser (L) et des signaux électriques (S) reçus par l'interface d'entrée (IN), sont arrangés entre l'interface d'entrée (IN) et l'émetteur laser (LE), dans lequel l'interface d'entrée (IN) est connectée à un circuit d'encodage (EC) qui encode le signal électrique (S) contenant l'information à transmettre et fournit un ou plusieurs signaux encodés (I, Q) qui module les signaux de support (CS, sin ωt, cos ωt).

18. Transmetteur selon la revendication 17, **caractérisé en ce que** le circuit d'encodage (EC) comprend un embrouilleur (SC), un encodeur Reed-Solomon (RSE), un entrelaçeur (IL) et/ou un encodeur FEC (EN).

19. Transmetteur selon la revendication 17 ou 18, **caractérisé en ce que** un ou plusieurs signaux électriques (I, Q) contenant l'information à transmettre sont filtrés par un ou plusieurs filtres numériques (DF) du type FIR avant qu'il module les signaux de support (CS, sin ωt, cos ωt).

20. Transmetteur selon l'une quelconque des revendications 17 à 19, **caractérisé en ce que** un ou plusieurs signaux émis par les modulateurs (MD) sont ajoutés les uns aux autres à un additionneur (SUM).

21. Transmetteur selon l'une quelconque des revendications 17 à 20, **caractérisé en ce que** le signal modulé (M) à transmettre est amplifié par un amplificateur (TA) connecté à l'émetteur laser (LE).

22. Transmetteur selon la revendication 21, **caractérisé en ce que** ledit amplificateur (TA) comprend un filtre passe-bande (BPF) établi à la fréquence intermédiaire des signaux de support (CS, sin ωt, cos ωt):

23. Transmetteur selon l'une quelconque des revendications 17 à 22, **caractérisé en ce qu'**un multiplexeur (CO) qui combine le signal modulé (M) avec d'autres signaux (M') modulés à différentes fréquences intermédiaires est disposé avant l'émetteur laser (LE) afin d'obtenir un signal unique (C).

24. Transmetteur selon l'une quelconque des revendications 17 à 23, **caractérisé en ce que** l'interface d'entrée (IN) extrait un signal d'horloge (CK) à partir du signal (S) à transmettre, et l'envoie vers un multiplicateur (MUL) qui multiplie ce signal par un facteur dépendant du taux de codage utilisé par le circuit d'encodage (EC) afin d'obtenir lesdits signaux de support (CS, sin ωt, cos ωt).

**25.** Transmetteur selon la revendication 24, **caractérisé en ce que** la fréquence intermédiaire des signaux de support (CS, sin ωt, cos ωt) est obtenue à partir de la formule suivante :

$$f(CS) = f(CK) \times r(RSE) \times r(EN)$$

dans laquelle f(CS) est ladite fréquence intermédiaire, f(CK) est la fréquence dudit signal d'horloge (CK), r(RSE) est la redondance introduite par l'encodeur Reed-Solomon (RSE), et r(EN) est la redondance introduite par l'encodeur FEC (EN).

**26.** Récepteur pour des signaux laser dans un espace libre qui comprend au moins un récepteur laser (LR) apte à recevoir un signal laser (L) contenant une information, ainsi qu'une interface de sortie (OUT) apte à renvoyer un signal électrique (S) contenant ladite information, **caractérisé en ce qu'**un ou plusieurs démodulateurs (DM), aptes à démoduler un ou plusieurs signaux électriques correspondants audit signal laser (L) avec un ou plusieurs signaux de support (CS, sin ωt, cos ωt) à des fréquences intermédiaires comprises entre les fréquences du signal laser (L) et du signal électrique (S) renvoyé par l'interface de sortie (OUT) sont disposés entre le récepteur laser (LR) et l'interface de sortie (OUT), dans lequel les signaux électriques (I, Q) renvoyés par lesdits démodulateurs (DM) sont décodés par un circuit de décodage (DC).

**27.** Récepteur selon la revendication 26, **caractérisé en ce que** le circuit de décodage comprend un décodeur FEC (DE), un dé-entrelaçeur (DIL), un décodeur Reed-Solomon (RSD) et/ou un désembrouilleur (DSC).

**28.** Récepteur selon la revendication 26 ou 27, **caractérisé en ce que** les signaux (I, Q) renvoyés par lesdits démodulateurs (DM) sont filtrés par un ou plusieurs filtres numériques (DF) du type FIR.

**29.** Récepteur selon la revendication 28, **caractérisé en ce que** lesdits filtres numériques (DF) sont connectés à un circuit de commande (CC) qui fournit un signal de commande à au moins un oscillateur commandé en tension (VCO) qui fournit un ou plusieurs signaux de support (CS, sin ωt, cos ωt) à des fréquences intermédiaires selon ce signal de commande.

**30.** Récepteur selon l'une quelconque des revendications 26 à 29, **caractérisé en ce que** les signaux de support (CS, sin ωt, cos ωt) à des fréquences intermédiaires sont obtenus à partir d'un multiplicateur (MUL) selon un signal d'horloge (CK) reçu à partir d'un circuit de récupération d'horloge (CR).

**31.** Récepteur selon la revendication 30, **caractérisé en ce que** le circuit de récupération d'horloge (CR) est connecté audit filtre numérique (DF) pour obtenir un signal de verrouillage d'horloge (CK) contenu dans lesdits signaux électriques (I, Q).

**32.** Récepteur selon l'une quelconque des revendications 26 à 31, **caractérisé en ce que** au moins un signal électrique (D) correspondant au signal laser (L) est amplifié par au moins un amplificateur de gains variable (IFA, AGC) connecté aux démodulateurs (DM).

**33.** Récepteur selon la revendication 32, **caractérisé en ce que** ledit amplificateur de gain variable (IFA, AGC) est de préférence établi à la fréquence intermédiaire du signal reçu (N) au moyen d'un filtre passe-bande (BPF).

**34.** Récepteur selon l'une quelconque des revendications 26 à 33, **caractérisé en ce qu'**un séparateur (SP), qui divise le signal électrique (D) correspondant au signal laser (L) et sépare une pluralité de signaux indépendants mutuellement combinés (N, N') à différentes fréquences intermédiaires, est disposé avant les démodulateurs (DM).

**35.** Récepteur selon la revendication 34, **caractérisé en ce que** le séparateur (SP) est connecté à un filtre passe-bande (BPF) qui est établi à la fréquence intermédiaire du signal reçu (N) et est à son tour connecté à un tampon à large bande (WBB).

Fig.1

Fig. 2

Fig.3

EP 1 512 235 B1

Fig.4